# EUROPEAN PATENT APPLICATION

(11) **EP 2 362 397 A2**
(43) Date of publication of application: **31.08.2011**
(21) Application number: 11154151.2
(22) Date of filing: 11.02.2011
(51) Int. Cl.: G11B 33/10, G11B 33/12, G06F 1/16

(54) **Electronic apparatus**

(30) Priority: 22.02.2010 JP 2010036578
(71) Applicant: Funai Electric Co., Ltd., Daito-shi, Osaka 574-0013 (JP)
(72) Inventor: Miyagi, Junji, Daito-shi Osaka 574-0013 (JP); Yamamoto, Takayuki, Daito-shi Osaka 574-0013 (JP); Muroi, Mari, Daito-shi Osaka 574-0013 (JP)
(74) Representative: Grünecker, Kinkeldey, Stockmair & Schwanhäusser Anwaltssozietät

(57) **Abstract**

An optical disc reproduction apparatus as an electronic apparatus comprises a display unit which is mounted on a main body unit via a hinge unit, and electrically connected to the main body by electrical wirings. The main body unit comprises a main body case, a hinge connecting portion and a control board which has connectors provided thereon. The hinge connecting portion and the connectors are placed in a housing portion formed in the main body unit, while the housing portion is open facing outward from the main body case. In a state where the main body unit is already assembled, the main body-side joint member of the hinge unit and the electrical wirings are housed into the housing portion to connect the main body-side joint member to the hinge connecting portion, and to connect the electrical wirings to the connectors. This structure increases assembling efficiency of the electronic apparatus.

## Description

### BACKGROUND OF THE INVENTION

### 1. Field of the Invention

The present invention relates to an electronic apparatus having a function to display images.

### 2. Description of the Related Art

In some conventional electronic apparatus having a function to display images, a display unit for displaying images is mounted on a main body unit via a hinge unit, in which the display unit can pivot relative to the main body unit while the display unit is electrically connected to the main body unit by electrical wiring. Generally, in such electronic apparatus, the main body unit has a main body case housing a control board, in which the main body case is composed of an upper case and a lower case that are connected to each other. For connecting the hinge unit to the main body unit, the hinge unit is connected to a hinge connecting portion provided on an inner surface of the main body case (upper case or lower case) e.g. by screwing in the inner surface side of the main body case.

In other words, the hinge unit cannot be connected to the main body unit in a state where the upper case and the lower case of the main body case are connected to each other. More specifically, the hinge unit can be connected to the main body unit only when the upper case and the lower case of the main body case are separated. Further, the electrical wiring extends inside the hinge unit, and is connected to a connector provided on the control board for the electrical connection to the main body unit. More specifically, the electrical wiring is connected to the connector of the control board when connecting the hinge unit to the main body unit in a state where the upper case and the lower case of the main body case are separated. Thus, the conventional electronic apparatus is assembled in a manner that the hinge unit is connected to the hinge connecting portion in the inner side of the main body unit (upper case or lower case), and the electrical wiring is connected to the connector of the control board before connecting the upper and lower cases of the main body case to each other (i.e. before assembling the main body unit), and thereafter the upper and lower cases are connected to each other.

However, the requirement that the hinge unit be connected to the hinge connecting portion in the inner side of the main body unit, and the electrical wiring be connected to the connector of the control board before connecting the upper and lower cases of the main body case, and thereafter the upper and lower cases be connected to each other, when assembling the conventional electronic apparatus as described above, causes problems. First, it causes low assembling efficiency. Second, it causes significant difficulty in assembling, so that damages and failures are likely to occur. Third, the main body case is required to be reversed or inclined when connecting the hinge unit to the main body case, resulting in the requirement of a table or a tool for exclusive use.

There are other known electronic apparatus for improvements relating to the electrical wiring. For example, Japanese Laid-open Patent Publication Hei 5-265592 discloses an electronic apparatus in which an opening to allow electrical wiring to pass through is provided with a protective wall so as to prevent complex bending of the electrical wiring, and is also provided with a first movable member and a second movable member so as to hide the opening from sight. Japanese Laid-open Patent Publication Hei 5-297981 discloses an electronic apparatus to connect electrical wiring to a connector through an opening, and cover the electrical wiring and the opening with a cover. Japanese Laid-open Patent Publication Hei 10-268976 discloses an electronic apparatus provided with an opening to insert a finger tip or a tool when connecting electrical wiring to a connector, and also provided with a cover to cover the opening. Japanese Patent 4363381 discloses an electronic apparatus provided with a slit to allow electrical wiring to pass through, and also provided with a rubber-based buffer material to cover the slit. Further, Japanese Patent 3517192 discloses an electronic apparatus to use an optical connector for connecting a display unit to a main body unit. However, these electronic apparatus disclosed in the prior art do not solve the problems described above.

### SUMMARY OF THE INVENTION

An object of the present invention is to provide an electronic apparatus with high assembling efficiency.

According to the present invention, this object is achieved by an electronic apparatus comprising a main body unit, a hinge unit and a display unit for displaying images which is mounted on the main body unit via the hinge unit and is electrically connected to the main body unit by at least one electrical wiring. The hinge unit comprises: a display-side joint member connected to the display unit; a main body-side joint member connected to the main body unit; and a hinge mechanical unit to pivotally connect the display-side joint member and the main body-side joint member to each other. The main body unit comprises: a control board; a main body case for housing the control board; and a hinge connecting portion to be connected to the main body-side joint member of the hinge unit. The main body case comprises a lower case corresponding to a lower part of the main body case, and an upper case corresponding to an upper part of the main body case and connected to the lower case. The control board has at least one connector provided thereon to be connected to the at least one electrical wiring. The at least one electrical wiring extends inside the hinge unit and is connected to the at least one connector. The main body unit further comprises a housing portion formed therein for housing the main body-side joint member of the hinge unit and the at least one electrical wiring, in which the housing portion is recessed inside its periphery in the main body case and is open facing outward from the main body case. Further, the hinge connecting portion and the at least one connector are placed in the housing portion.

According to the thus structured electronic apparatus of the present invention, the housing portion formed in the main body unit is open facing outward from the main body case, while the hinge connecting portion and the at least one connector are placed in the housing portion, so that the main body-side joint member of the hinge unit can be housed into the housing portion from outside the main body case and connected to the hinge connecting portion, and the at least one electrical wiring extending inside the hinge unit can be connected to the control board in a state where the upper case and the lower case of the main body case are connected to each other (i.e. a state where the main body unit is already assembled). Thus, when assembling the electronic apparatus, the hinge unit can be connected to the main body unit, and the at least one electrical wiring extending inside the hinge unit can also be connected to the main body unit in a state where the main body unit is already assembled (i.e. a state where the upper case and the lower case of the main body case are already connected to each other), making it possible to achieve high assembling efficiency. In addition, the main body-side joint member of the hinge unit and the at least one electrical wiring are housed in the hinge housing portion, which is recessed inside its periphery in the main body case, so that the electronic apparatus can be kept thin, and can be easily assembled, making it possible to prevent occurrence of damages and failures. Further, when connecting the hinge unit to the main body unit, and when connecting the at least one electrical wiring to the main body unit, the main body unit is not required to be reversed or inclined, thus eliminating the need for a table or a tool for exclusive use.

Preferably, the electronic apparatus further comprises a cover attached to the main body case for covering the housing portion while the display-side joint member and the hinge mechanical unit of the hinge unit are located outside the main body case.

Further preferably, the at least one connector comprises multiple connectors, and the at least one electrical wiring comprises multiple electrical wirings, wherein the multiple electrical wirings are respectively connected to the multiple connectors, and wherein the multiple connectors are arranged such that the longitudinal directions of the connectors are aligned in the same direction.

Yet further preferably, the housing portion is continuously open from a position where the hinge connecting portion is placed to a position where the connectors are placed.

Still further preferably, the main body unit further comprises an optical disc reading unit for reading recorded data from an optical disc, wherein the main body case houses the control board and the optical disc reading unit, and wherein the display unit displays images based on recorded data read from the optical disc.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG 1A is a schematic perspective view, and FIG. 1B is a schematic exploded perspective view of an optical disc reproduction apparatus according to an embodiment of the present invention; and
FIG. 2A is a schematic plan view of the optical disc reproduction apparatus, while FIG 2B is a schematic cross-sectional view of a part of the optical disc reproduction apparatus taken along line A-A of FIG. 2A.

### DESCRIPTION OF THE PREFERRED EMBODIMENTS

Embodiments of the present invention, as best mode for carrying out the invention, will be described hereinafter with reference to the drawings. The present invention relates to an electronic apparatus. It is to be understood that the embodiments herein are not intended as limiting, or encompassing the entire scope of, the invention. It is also to be noted that like parts are designated by like reference numerals or characters throughout the drawings.

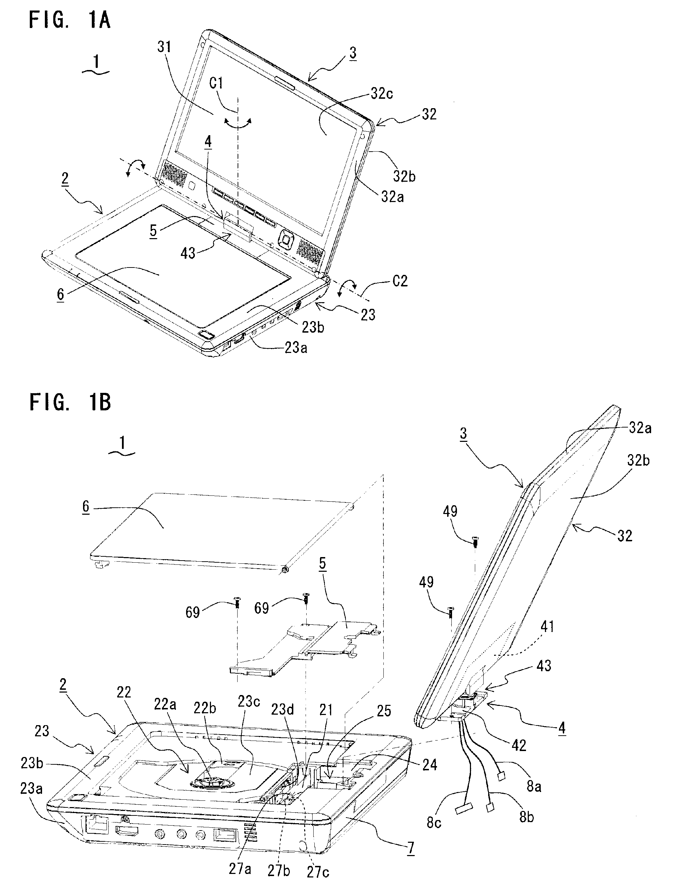

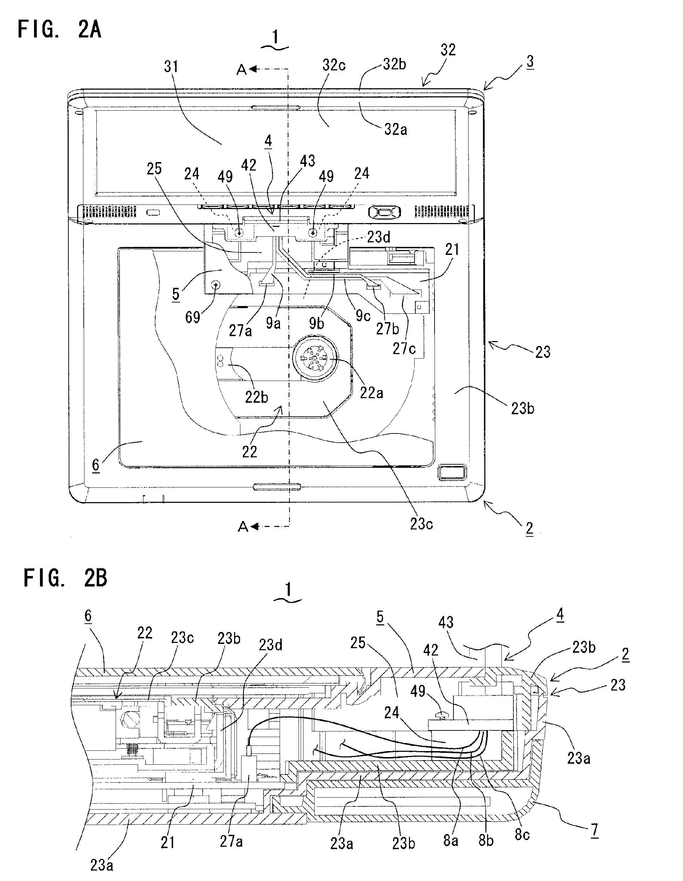

An optical disc reproduction apparatus 1 as an electronic apparatus according to an embodiment of the present invention will be described with reference to FIGs. 1A, 1B and FIGs. 2A, 2B. FIG 1A is a schematic perspective view, and FIG 1B is a schematic exploded perspective view of the optical disc reproduction apparatus 1. FIG. 2A is a schematic plan view of the optical disc reproduction apparatus 1, while FIG 2B is a schematic cross-sectional view of a part of the optical disc reproduction apparatus 1 taken along line A-A of FIG 2A. The optical disc reproduction apparatus 1 serves to reproduce images from an optical disc such as DVD (Digital Versatile Disc) and BD (Blu-ray Disc). The optical disc reproduction apparatus 1 is a portable type.

The optical disc reproduction apparatus 1 comprises a main body unit 2, a display unit 3, and a hinge unit 4 via which the display unit 3 is mounted on the main body unit 2. The optical disc reproduction apparatus 1 further comprises: a cover 5; an inner cover 6; a battery pack 7; electrical wirings 8a, 8b, 8c for electrically connecting the display unit 3 to the main body unit 2; and so on. The hinge unit 4 comprises: a display-side joint member 41 connected to the display unit 3; a main body-side joint member 42 connected to the main body unit 2; a hinge mechanical unit 43 to pivotally connect the display-side joint member 41 and the main body-side joint member 42 to each other; and so on. The hinge unit 4 is a so-called two-axis swivel hinge, in which the hinge mechanical unit 43 connects and allows the display-side joint member 41 and the main body-side joint member 42 to be pivotal relative to each other about two axes. More specifically, in the optical disc reproduction apparatus 1, the display-side joint member 41 of the hinge unit 4 is connected to the display unit 3, while the main body-side joint member 42 of the hinge unit 4 is connected to the main body unit 2, so as to allow the display unit 3 to be pivotal relative to the main body unit 2 about two axes.

The display-side joint member 41 is connected to a center part of a lower end of the display unit 3, while the main body-side joint member 42 is connected to a center part of a rear end of the main body unit 2. More specifically, the display unit 3 is pivotal relative to the main body unit 2 about an axis, serving as a first center pivot axis (axis C1 in FIG 1A), passing through the hinge mechanical unit 43 (through a center of the rear end of the main body unit 2) and vertical to an upper surface of the main body unit 2. Further, the display unit 3 is also pivotal relative to the main body unit 2 about an axis, serving as a second center pivot axis (axis C2 in FIG 1A), passing through the hinge mechanical unit 43 and parallel to a lower end of the display unit 3. When carrying the optical disc reproduction apparatus 1 as a portable apparatus, the display unit 3 is closed and laid on the upper surface of the main body unit 2.

The main body unit 2 comprises: a control board 21 for controlling the operation of the optical disc reproduction apparatus 1; an optical disc reading unit 22 for reading recorded data from an optical disc; a main body case 23 for housing the control board 21 and the optical disc reading unit 22; a hinge connecting portion 24 to be connected to the main body-side joint member 42 of the hinge unit 4; and so on. The main body unit 2 further comprises a housing portion 25 formed therein for housing the main body-side joint member 42 of the hinge unit 4 and the electrical wirings 8a, 8b, 8c. The optical disc reading unit 22 comprises a spindle motor 22a coupled to the optical disc for rotating the optical disc, and an optical pickup head 22b for reading data recorded on the optical disc.

The main body case 23 comprises a lower case 23a corresponding to (or more specifically, occupying) a lower part of the main body case 23, and an upper case 23b corresponding to (or more specifically, occupying) an upper part of the main body case 23, in which the lower case 23a and the upper case 23b are connected to each other. The control board 21 is arranged parallel to a lower surface (bottom surface) of the main body case 23. The control board 21 has multiple connectors 27a, 27b, 27c provided thereon to be connected to the electrical wirings 8a, 8b, 8c. The optical disc reading unit 22 is arranged above the control board 21. A part of the optical disc reading unit 22 including the spindle motor 22a and the optical pickup head 22b is arranged to face a reading opening 23c formed in the upper case 23b so as to make it possible to read recorded data from the optical disc which is mounted on the optical disc reading unit 22 from outside the main body case 23.

The housing portion 25 is recessed inside its periphery in the main body case 23, and is open facing outward from the main body case 23, and is further formed by the shape of the main body case 23. The opening of the housing portion 25 is larger than the main body-side joint member 42 of the hinge unit 4, and is open such that the main body-side joint member 42 of the hinge unit 4 can be housed into the housing portion 25 from outside the main body case 23 and connected to the hinge connecting portion 24 in a state where the upper case 23b and the lower case 23a of the main body case 23 are connected to each other (i.e. a state where the main body unit 2 is already assembled). The housing portion 25 is continuously open (more specifically, the opening of the housing portion 25 is open upward) from a position where (more specifically, a position corresponding to where) the hinge connecting portion 24 is placed to a position where (more specifically, a position corresponding to where) the multiple connectors 27a, 27b, 27c are placed.

In the present embodiment, the housing portion 25 is recessed downward (toward the lower case 23a) from its periphery in the upper case 23b of the main body case 23, and is open facing upward from the main body case 23. Further, the housing portion 25 is formed by the shape of the recess in the upper case 23b of the main body case 23. The hinge connecting portion 24 is provided on a bottom portion of, and placed in, the housing portion 25. In the present embodiment, the hinge connecting portion 24 is integrally formed with the upper case 23b of the main body case 23. The main body-side joint member 42 of the hinge unit 4, while housed in the housing portion 25, is connected to the hinge connecting portion 24 by screwing with hinge mounting screws 49. The multiple connectors 27a, 27b, 27c are provided on portions of the control board 21 which project to the housing portion 25 from the position of a wiring opening 23d formed in the upper case 23b, so that the connectors 27a, 27b, 27c are placed in the housing portion 25. Further, the connectors 27a, 27b, 27c are arranged such that the longitudinal directions of the connectors 27a, 27b, 27c are aligned in the same direction.

The display unit 3 serves to display images, and comprises a liquid crystal panel 31 for displaying images, a display case 32 for housing the liquid crystal panel 31, and so on. The display case 32 comprises a front case 32a corresponding to (more specifically, occupying) a front part of the display case 32, and a rear case 32b corresponding to (more specifically, occupying) a rear part of the display case 32, in which the front case 32a and the rear case 32b are connected to each other. The liquid crystal panel 31 faces a display opening 32c formed in the front case 32a. The display unit 3 displays images based on recorded data read by the optical disc reading unit 22 from the optical disc. The display-side joint member 41 of the hinge unit 4 is connected to a hinge mounting portion (not shown) provided on an inner surface of the rear case 32b of the display case 32.

The cover 5 serves to cover the housing portion 25. The cover 5 is attached to the upper case 23b of the main body case 23 to cover the housing portion 25 while the display-side joint member 41 and the hinge mechanical unit 43 of the hinge unit 4 are located outside the main body case 23. The cover 5 is attached to the upper case 23b by screwing with cover mounting screws 69. The inner cover 6 is pivotally supported by the upper case 23b of the main body case 23 so as to be able to open/close an optical disc mounting area of the main body unit 2 (i.e. area where the optical disc is present when the optical disc is mounted on the spindle motor 22a of the optical disc reading unit 22). When the inner cover 6 is closed, the optical disc mounting area of the main body unit 2 and a part of the cover 5 are covered by the inner cover 6. When the inner cover 6 is opened, the optical disc mounting area of the main body unit 2 is exposed, making it possible to insert and remove the optical disc into and from the main body unit 2 (i.e. to mount and remove the optical disc on and from the spindle motor 22a).

The battery pack 7 serves to supply power to the optical disc reproduction apparatus 1. The battery pack 7 is designed to be attachable and detachable to and from the main body unit 2 (lower case 23a of the main body case 23). The battery pack 7 has a built-in secondary battery, and when attached to the main body unit 2, supplies the power of the secondary battery to the main body unit 2. The electrical wirings 8a, 8b, 8c extend inside the hinge unit 4. One ends of the electrical wirings 8a, 8b, 8c are connected to a circuit board (not shown) in the display unit 3. While housed in the housing portion 25 of the main body unit 2, the other ends of the electrical wirings 8a, 8b, 8c are respectively connected to the connectors 27a, 27b, 27c provided on the control board 21.

Next, a method of assembling the optical disc reproduction apparatus 1 of the present embodiment will be described. First, the display unit 3 is connected and assembled with the hinge unit 4. More specifically, while the electrical wirings 8a, 8b, 8c are allowed to extend inside the hinge unit 4, and the front case 32a and the rear case 32b of the display case 32 are separate from each other, one ends of the electrical wirings 8a, 8b, 8c are connected to the circuit board (not shown) of the display unit 3, and the display-side joint member 41 of the hinge unit 4 is connected to the hinge mounting portion (not shown) provided on the inner surface of the rear case 32b. Further, the front case 32a and the rear case 32b are connected to each other to sandwich the liquid crystal panel 31 and the circuit board therebetween so as to house the liquid crystal panel 31 and the circuit board in the display case 32.

On the other hand, the main body unit 2 is assembled. More specifically, the upper case 23b and the lower case 23a of the main body case 23 are connected to each other to sandwich the control board 21 and the optical disc reading unit 22 so as to assemble the main body unit 2 housing the control board 21 and the optical disc reading unit 22 therein. Thereafter, the hinge unit 4 is connected to the main body unit 2. More specifically, the main body-side joint member 42 of the hinge unit 4 connected to the display unit 3 is housed into the housing portion 25 from outside the main body case 23 of the main body unit 2 which has been assembled (i.e. which has the upper case 23b and the lower case 23a connected to each other).

Thereafter, the main body-side joint member 42 of the hinge unit 4 is connected to the hinge connecting portion 24 of the main body unit 2 by screwing with the hinge mounting screws 49. Further, the electrical wirings 8a, 8b, 8c extending inside the hinge unit 4 are connected at the other ends thereof to the connectors 27a, 27b, 27c provided on the control board 21, and are housed in the housing portion 25. Subsequently, the cover 5 is attached to the main body unit 2. More specifically, the cover 5 is attached to the upper case 23b of the main body case 23 by screwing with the cover mounting screws 69. Finally, the inner cover 6 is attached to the main body unit 2. Thus, the optical disc reproduction apparatus 1 is completed and assembled.

The thus structured optical disc reproduction apparatus 1 of the present embodiment makes it possible to house the main body-side joint member 42 of the hinge unit 4 into the housing portion 25 from outside the main body case 23 and to connect the main body-side joint member 42 to the hinge connecting portion 24, and further to connect the electrical wirings 8a, 8b, 8c extending inside the hinge unit 4 to the control board 21 (more specifically, the connectors 27a, 27b, 27c of the control board 21) in a state where the upper case 23b and the lower case 23a of the main body case 23 are connected to each other (i.e. a state where the main body unit 2 is already assembled). Thus, when assembling the optical disc reproduction apparatus 1, the hinge unit 4 can be connected to the main body unit 2, and the electrical wirings 8a, 8b, 8c extending inside the hinge unit 4 can also be connected to the main body unit 2 in a state where the main body unit 2 is already assembled (i.e. a state where the upper case 23b and the lower case 23a of the main body case 23 are already connected to each other), making it possible to achieve high assembling efficiency.

In addition, in the optical disc reproduction apparatus 1, the main body-side joint member 42 of the hinge unit 4 and the electrical wirings 8a, 8b, 8c are housed in the housing portion 25, which is recessed downward from its periphery of the main body case 23, so that the optical disc reproduction apparatus 1 can be kept thin, and can be easily assembled, making it possible to prevent occurrence of damages and failures. Further, when connecting the hinge unit 4 to the main body unit 2, and when connecting the electrical wirings 8a, 8b, 8c to the main body unit 2, the main body unit 2 is not required to be reversed or inclined, thus eliminating the need for a table or a tool for exclusive use.

Furthermore, the cover 5 covers the housing portion 25, so that the cover 5 can cover the hinge connecting portion 24 of the main body unit 2, the main body-side joint member 42 of the hinge unit 4 and the electrical wirings 8a, 8b, 8c. This makes it possible to improve the design of the main body unit 2, and hence of the optical disc reproduction apparatus 1. In addition, the multiple connectors 27a, 27b, 27c are arranged to allow the longitudinal directions thereof to be aligned in the same direction, so that the housing portion 25 can be made small, making it possible to increase the strength of the main body case 23, and to reduce the size of the cover 5 which in turn makes it possible to further improve the design of the optical disc reproduction apparatus 1.

It is to be noted that the present invention is not limited to the above embodiments, and various modifications are possible within the spirit and scope of the present invention. For example, the hinge connecting portion of the main body unit is not necessarily formed integrally with the upper case of the main body case, but can be formed separately from the main body case so as to be mounted on the upper case of the main body case. Furthermore, the hinge housing portion of the main body unit is not necessarily formed by the shape of the recess in the upper case of the main body case, but can be formed by a space in the main body case and an opening provided in the upper case of the main body case. In this case, the hinge connecting portion of the main body unit can be formed on an inner surface of the lower case of the main body case, or can be integrally formed with the lower case of the main body case, or alternatively can be formed separately from the main body case so as to be mounted on the lower case of the main body case.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

This application is based on Japanese patent application 2010-036578 filed February 22, 2010, the content of which is hereby incorporated by reference.

## Claims

1. An electronic apparatus comprising a main body unit, a hinge unit and a display unit for displaying images which is mounted on the main body unit via the hinge unit and is electrically connected to the main body unit by at least one electrical wiring,
wherein the hinge unit comprises: a display-side joint member connected to the display unit; a main body-side joint member connected to the main body unit; and a hinge mechanical unit to pivotally connect the display-side joint member and the main body-side joint member to each other,
wherein the main body unit comprises: a control board; a main body case for housing the control board; and a hinge connecting portion to be connected to the main body-side joint member of the hinge unit,
wherein the main body case comprises a lower case corresponding to a lower part of the main body case, and an upper case corresponding to an upper part of the main body case and connected to the lower case,
wherein the control board has at least one connector provided thereon to be connected to the at least one electrical wiring,
wherein the at least one electrical wiring extends inside the hinge unit and is connected to the at least one connector,
wherein the main body unit further comprises a housing portion formed therein for housing the main body-side joint member of the hinge unit and the at least one electrical wiring, in which the housing portion is recessed inside its periphery in the main body case and is open facing outward from the main body case, and
wherein the hinge connecting portion and the at least one connector are placed in the housing portion.

2. The electronic apparatus according to claim 1,
which further comprises a cover attached to the main body case for covering the housing portion while the display-side joint member and the hinge mechanical unit of the hinge unit are located outside the main body case.

3. The electronic apparatus according to claim 2,
wherein the at least one connector comprises multiple connectors, and the at least one electrical wiring comprises multiple electrical wirings,
wherein the multiple electrical wirings are respectively connected to the multiple connectors, and
wherein the multiple connectors are arranged such that the longitudinal directions of the connectors are aligned in the same direction.

4. The electronic apparatus according to claim 3,
wherein the housing portion is continuously open from a position where the hinge connecting portion is placed to a position where the connectors are placed.

5. The electronic apparatus according to claim 4,
wherein the main body unit further comprises an optical disc reading unit for reading recorded data from an optical disc,
wherein the main body case houses the control board and the optical disc reading unit, and
wherein the display unit displays images based on recorded data read from the optical disc.

6. The electronic apparatus according to claim 2,
wherein the main body unit further comprises an optical disc reading unit for reading recorded data from an optical disc,
wherein the main body case houses the control board and the optical disc reading unit, and
wherein the display unit displays images based on recorded data read from the optical disc.

7. The electronic apparatus according to claim 1,
wherein the at least one connector comprises multiple connectors, and the at least one electrical wiring comprises multiple electrical wirings,
wherein the multiple electrical wirings are respectively connected to the multiple connectors, and
wherein the multiple connectors are arranged such that the longitudinal directions of the connectors are aligned in the same direction.

8. The electronic apparatus according to claim 1,
wherein the housing portion is continuously open from a position where the hinge connecting portion is placed to a position where the connectors are placed.

9. The electronic apparatus according to claim 1,
wherein the main body unit further comprises an optical disc reading unit for reading recorded data from an optical disc,
wherein the main body case houses the control board and the optical disc reading unit, and
wherein the display unit displays images based on recorded data read from the optical disc.
